# FASCICULE DE BREVET EUROPEEN

(11) **EP 0 547 534 B1**
(45) Date de publication et mention de la délivrance du brevet: **13.03.1996**
(21) Numéro de dépôt: 92121219.7
(22) Date de dépôt: 12.12.1992
(51) Int. Cl.: H02K 37/12, H02K 21/24, G04C 13/11

(54) **Transducteur électromagnétique à aimant permanent multipolaire**
Elektromagnetischer Wandler mit einem vielpoligen Dauermagnet
Electromagnetic transducer with a multipolar permanent magnet

(30) Priorité: 17.12.1991 FR 9115767
(43) Date de publication de la demande: 23.06.1993
(73) Titulaire: Eta SA Fabriques d'Ebauches, CH-2540 Granges (CH)
(72) Inventeur: Taghezout, Daho, CH-1006 Lausanne (CH)
(74) Mandataire: de Montmollin, Henri

(56) Documents cités:
- EP-A- 0 135 055
- WO-A-82/00929
- WO-A-85/00705
- FR-A- 2 518 844

## Description

La présente invention concerne un transducteur électromagnétique à aimant permanent multipolaire. Plus particulièrement, la présente invention concerne un transducteur biphasé à aimant permanent multipolaire présentant N paires de pôles, N étant un nombre pair supérieur à 2, pouvant être utilisé comme transducteur électromécanique réversible.

Le transducteur électromagnétique de la présente invention est susceptible d'être utilisé comme moteur dans de nombreuses applications, par exemple l'entraînement de disques, de bobines ou de cassettes dans le domaine informatique ou le domaine audio-visuel. On peut aussi utiliser ce transducteur électromagnétique pour entraîner l'aiguille d'un indicateur analogique, tel qu'un compteur de vitesse dans une voiture ou une montre électronique.

Dans le cas de la montre électronique, on utilise généralement un moteur électromagnétique à aimant permanent bipolaire fonctionnant dans un mode pas à pas, le rotor effectuant par pas une rotation de 180°. Si la montre comporte une aiguille de seconde dont l'avance par pas est effectuée à la fréquence de 1 Hz, il faut alors une démultiplication d'un facteur 30 entre le rotor du moteur et cette aiguille. La rotation du rotor de 180° par pas et le système de roues servant à la démultiplication entraînent des pertes d'énergie dues essentiellement aux frottements et engendrent un bruit relativement important.

Ensuite, si on désire obtenir un déplacement quasi continu de l'aiguille des secondes avec un moteur à aimant permanent bipolaire, il est nécessaire d'augmenter la fréquence de fonctionnement du moteur et par conséquent la démultiplication entre le rotor de ce moteur et cette aiguille. Ceci entraîne inévitablement des pertes d'énergie supplémentaires et des modifications de la conception du mouvement horloger, spécialement pour ce qui concerne le dimensionnement des roues d'entraînement.

Par contre, un moteur multipolaire présentant suffisamment de paires de pôles permet de réduire les pertes d'énergie, voire le nombre de roues de transmission, et il rend possible un déplacement quasi continu du mécanisme associé, sans pour autant nécessiter une démultiplication plus grande que celle qui est nécessaire dans le cas du moteur à aimant permanent bipolaire mentionné ci-avant.

On notera aussi qu'un moteur à aimant permanent multipolaire peut permettre une diminution du bruit d'entraînement.

Il est connu notamment du brevet européen EP 0 151 158 un moteur électromagnètique biphasé à aimant permanent multipolaire à aimantation axiale. Le stator de ce moteur est formé essentiellement de quatre pièces statoriques principales et de deux branches de guidage du flux magnétique portant chacune une bobine et reliant chacune deux de ces pièces statoriques. Les deux parties statoriques reliées respectivement à la première et à la deuxième bobine sont profilées de manière qu'elles s'imbriquent l'une dans l'autre, et que, lorsque la première partie statorique se superpose aux pôles sud situés sur l'une des deux moitiés de l'aimant permanent multipolaire, la seconde partie statorique est superposée aux pôles nord de la même moitié de l'aimant permanent multipolaire.

L'aimantation de l'aimant permanent multipolaire étant axiale, un disque en matériau ferro-magnétique doux, servant à guider le flux magnétique, est fixé, dans une première variante, sur la face de l'aimant permanent opposée à celle située en regard des pièces statoriques. Dans une deuxième variante, ce disque est monté de façon que l'aimant permanent du rotor soit disposé entre lui et le plan général statorique.

Ce moteur présente les inconvénients suivants:
- Les deux parties statoriques principales correspondantes imbriquées l'une dans l'autre nécessitent un ajustement délicat. En plus, elles ne sont pas appropriées pour un nombre de pôles élevé. Ensuite, un entrefer relativement important doit être ménagé entre ces deux parties situées dans un même plan étant donné la différence de potentiel magnétique entre ces deux parties lorsque la bobine correspondante est excitée.
- Dans la première variante, le disque en matériau ferromagnétique doux fixé sur une des faces de l'aimant permanent du rotor donne lieu à des courts-circuits magnétiques entre les pôles magnétiques de l'aimant permanent du rotor. De plus, l'aimant permanent du rotor étant situé dans un plan autre que le plan général statorique, il est attiré par le stator lui-même. Il est donc nécessaire d'exercer une force pour le maintenir en place, ce qui occasionne des frottements diminuant le rendement du moteur. Enfin, ce disque augmente l'inertie du rotor sans augmenter son volume utile.
- Dans la deuxième variante, le problème du positionnement de l'aimant permanent du rotor et de l'augmentation de l'inertie sont partiellement résolus, mais au détriment d'une augmentation de la réluctance magnétique. En effet, les flux magnétiques circulant dans l'un des circuits magnétiques du moteur traversent alors quatre entrefers stator - aimant permanent du rotor.

On connaît aussi du brevet suisse CH 656 990 un autre moteur électromagnétique biphasé à aimant permanent multipolaire.

Le stator de ce moteur est essentiellement formé par une pièce statorique définissant un trou statorique et quatre pôles statoriques. Deux pôles statoriques adjacents sont reliés entre eux par une branche sur laquelle est montée une bobine d'alimentation. De la même manière, les deux pôles restant sont reliés entre eux par une deuxième branche portant une deuxième bobine d'alimentation. L'aimantation des paires de pôles magnétiques de l'aimant permanent du rotor est axiale.

L'aimant permanent du rotor est situé dans un plan voisin, mais différent du plan statorique. Pour permettre le couplage magnétique entre les pôles statoriques et l'aimant permanent, des pôles statoriques secondaires, formés par des dents disposées environ sur un quart de la circonférence du trou statorique et dirigées vers le centre de celui-ci, sont prévus.

Chaque pôle secondaire appartenant à un même pôle principal est décalé angulairement d'un nombre pair de pôles rotoriques par rapport aux autres pôles secondaires de ce pôle principal et d'un nombre impair de pôles rotoriques par rapport aux pôles secondaires du second pôle principal alimenté par la même bobine, alors qu'il est décalé angulairement d'un nombre entier plus un demi de pôles rotoriques par rapport aux pôles secondaires des deux autres pôles principaux reliés magnétiquement à l'autre bobine.

Cette configuration particulière des pôles secondaires permet un fonctionnement de 60 pas par tour pour un aimant permanent possédant trente paires de pôles disposées axialement en alimentant alternativement les deux bobines. De plus, un tel moteur fonctionne dans les deux sens possibles de rotation du rotor.

Cependant, ce moteur présente au moins deux désavantages majeurs. Premièrement, afin de permettre un retour du flux magnétique, un disque de faible réluctance magnétique est appliqué contre la face de l'aimant permanent qui est opposée à la face située en regard du stator. De la même manière que dans le cas de la première variante du moteur précédent, cette plaque occasionne des courts-circuits magnétiques et augmente ainsi les champs de fuite de l'aimant permanent du rotor. De plus, cette plaque augmente l'inertie du rotor. Ensuite, l'aimant permanent du rotor est placé également dans une position de non-équilibre au sein du stator, c'est-à-dire dans une position ne correspondant pas à l'énergie minimum du système stator - rotor. Ainsi, l'aimant du rotor est attiré par les pièces statoriques situées dans un plan voisin à celui de l'aimant permanent. Pour maintenir l'aimant dans sa position, il est nécessaire d'exercer une force mécanique de maintien engendrant des forces de frottement diminuant le rendement d'un tel moteur.

Deuxièmement, les deux pôles associés à la même bobine doivent être isolés magnétiquement par un entrefer relativement important étant donné la différence de potentiel magnétique entre ces deux pôles lorsque la bobine associée est excitée. Ceci diminue l'utilisation possible du volume aimanté de l'aimant permanent du rotor.

Le but de la présente invention est de pallier les inconvénients décrits ci-dessus en fournissant un transducteur électromagnétique multipolaire biphasé dans lequel la position de l'aimant permanent du rotor correspond sensiblement à une position d'énergie minimale qui est une position d'équilibre de celui-ci dans le stator, ce moteur présentant en outre une configuration compacte, un très bon rendement et un coût de fabrication relativement peu onéreux.

La présente invention a donc pour objet un transducteur électromagnétique comprenant:
- un stator comprenant deux branches de guidage du flux magnétique et une première partie statorique principale définissant un premier trou statorique ayant une région centrale et une région périphérique entourant ladite région centrale, le contour dudit premier trou statorique définissant dans ladite région périphérique un premier créneau circulaire situé dans un premier plan statorique et formé de merlons séparés par des embrasures;
- un rotor ayant un axe de rotation perpendiculaire audit premier plan statorique et traversant ladite région centrale dudit premier trou statorique, ce rotor comportant un nombre pair et supérieur à deux d'aimants permanents bipolaires disposés annulairement autour dudit axe de rotation et définissant un plan général rotorique, ces aimants bipolaires ayant chacun un axe magnétique parallèle audit axe de rotation, deux aimants bipolaires adjacents ayant respectivement deux axes magnétiques de sens opposé, lesdites paires de pôles magnétiques étant au moins partiellement disposées en regard d'une partie de superposition desdits merlons et définissant dans ledit plan rotorique des secteurs annulaires dont les angles au centre ont des valeurs identiques;
- des première et seconde bobines montées respectivement sur lesdites première et deuxième branches de guidage du flux magnétique;
   ce transducteur électromagnétique étant caractérisé en ce que ledit stator comprend une deuxième partie statorique principale ayant une partie de superposition disposée en regard desdites paires de pôles magnétiques et définissant un deuxième plan statorique parallèle audit premier plan statorique, lesdites parties de superposition desdits merlons et de ladite deuxième partie statorique principale étant respectivement situées d'un premier côté et d'un second côté dudit plan général rotorique et étant au moins partiellement superposées l'une à l'autre, ladite première partie statorique principale définissant des premier et deuxième pôles magnétiques principaux et ladite deuxième partie statorique principale définissant au moins un troisième pôle magnétique principal, lesdites première et deuxième branches de guidage du flux magnétique reliant magnétiquement et respectivement lesdits premier et deuxième pôles magnétiques principaux avec ladite deuxième partie principale, ledit premier créneau circulaire étant formé par des premier et second créneaux réguliers séparés l'un de l'autre par des première et deuxième zones à haute réluctance magnétique, les merlons dudit premier, respectivement second créneau régulier définissant des premiers, respectivement deuxièmes pôles magnétiques secondaires reliés magnétiquement audit premier, respectivement deuxième pôle magnétique principal, deux merlons adjacents dudit premier, respectivement deuxième créneau régulier étant décalés angulairement l'un par rapport à l'autre de deux fois ladite valeur dudit angle au centre, un quelconque merlon dudit premier créneau régulier étant décalé angulairement par rapport à un quelconque merlon dudit deuxième créneau régulier d'un angle dont la valeur est égale à un nombre entier de fois ladite valeur dudit angle au centre plus un demi de cette valeur.

Dans le présent document, on nomme secteur annulaire la surface limitée par deux rayons partant d'un seul et même point et par deux arcs de cercle centrés tous deux sur ce point, les extrémités des deux arcs de cercle étant situées chacune sur un des deux rayons.

Dans un mode de réalisation particulier, la deuxième partie statorique est formée par une partie annulaire et un corps reliés entre eux par un cou, le corps comprenant deux oreilles de contact magnétique. Dans la région avoisinant le bord externe de la partie annulaire, il est prévu, dans une variante préférée, un deuxième créneau circulaire dont les merlons et les embrasures sont disposés de manière identique au premier créneau circulaire de la première partie statorique principale, les merlons de ce dernier étant essentiellement superposés aux merlons du deuxième créneau circulaire. La première partie statorique est plane et située entièrement contre le premier plan statorique, alors que la deuxième partie statorique principale est aussi plane et située entièrement contre le deuxième plan statorique.

Dans un autre mode de réalisation particulier de l'invention, le deuxième créneau circulaire de la deuxième partie statorique principale superposé au premier créneau circulaire de la première partie statorique principale est situé sur le bord interne de la partie annulaire, les merlons de ce deuxième créneau circulaire ayant alors une épaisseur supérieure à l'épaisseur de l'anneau pour forcer le flux magnétique de couplage aimant-bobine à se refermer à travers l'aimant permanent multipolaire du rotor.

Dans les deux modes de réalisation particuliers de l'invention mentionnés ci-avant, les merlons du deuxième créneau circulaire de la deuxième partie statorique principale forment des troisièmes pôles magnétiques secondaires reliés magnétiquement audit troisième pôle magnétique principal. Cependant, dans un autre mode de réalisation de l'invention, la deuxième partie statorique principale ne comporte pas de créneau circulaire définissant des troisièmes pôles magnétiques secondaires, seul un anneau ou disque collecteur du flux magnétique étant prévu.

Finalement, dans un autre mode de réalisation de l'invention, la deuxième partie statorique principale définit deux pôles magnétiques principaux, chacun de ces deux pôles magnétiques principaux correspondant à un pôle magnétique principal de la première partie statorique principale, les deux circuits magnétiques résultants de ce transducteur électromagnétique étant alors entièrement découplés magnétiquement.

il résulte de ces caractéristiques un transducteur électromagnétique dont l'aimant permanent multipolaire du rotor est placé relativement au stator dans une position d'énergie magnétique minimale, c'est-à-dire dans une position d'équilibre. Ensuite, le rendement de ce transducteur est élevé étant donné que les circuits magnétiques du transducteur traversent une seule fois de manière axiale l'aimant permanent multipolaire du rotor, limitant ainsi l'entrefer dans chaque circuit magnétique de ce transducteur électromagnétique tout en assurant une utilisation optimale du volume aimanté de l'aimant permanent du rotor.

Dans le cas des modes de réalisation où la deuxième partie statorique principale comprend un deuxième créneau circulaire superposé au premier créneau circulaire de la première partie statorique, le rendement du transducteur électromagnétique selon l'invention est encore amélioré étant donné que les champs de fuite de l'aimant permanent multipolaire du rotor sont extrêmement faibles.

D'autres buts et avantages de l'invention apparaîtront mieux à la lecture de la description détaillée qui suit, faite en référence aux dessins annexés qui sont donnés uniquement à titre d'exemples et dans lesquels :
- La figure 1 est une vue en plan d'un premier mode de réalisation d'un transducteur électromagnétique selon l'invention;
- la figure 2 représente l'aimant permanent multipolaire du rotor de la figure 1;
- les figures 3 et 4 représentent respectivement les première et deuxième parties statoriques principales du transducteur électromagnétique de la figure 1;
- la figure 5 est une vue en coupe selon la ligne de coupe V-V de la figure 1;
- les figures 6 et 7 représentent respectivement des deuxième et troisième modes de réalisation d'un transducteur électromagnétique selon l'invention;
- la figure 9 représente un quatrième mode de réalisation d'un transducteur électromagnétique selon l'invention.

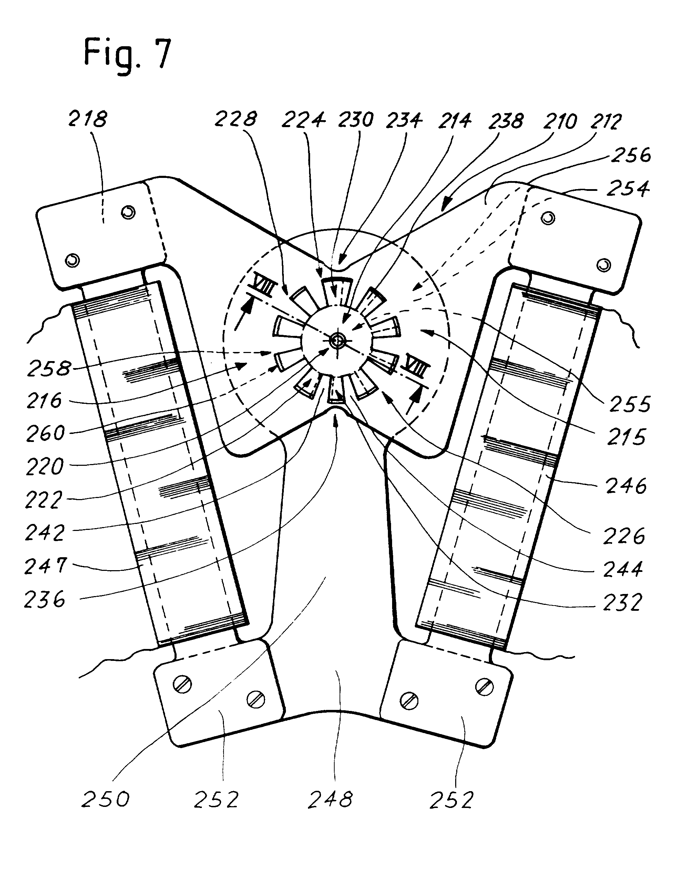

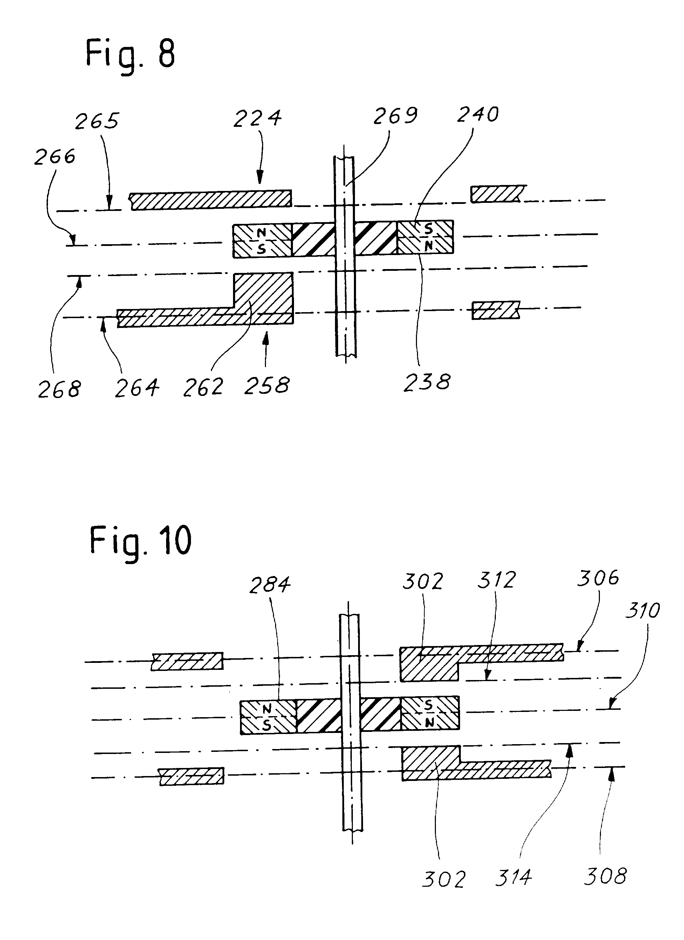

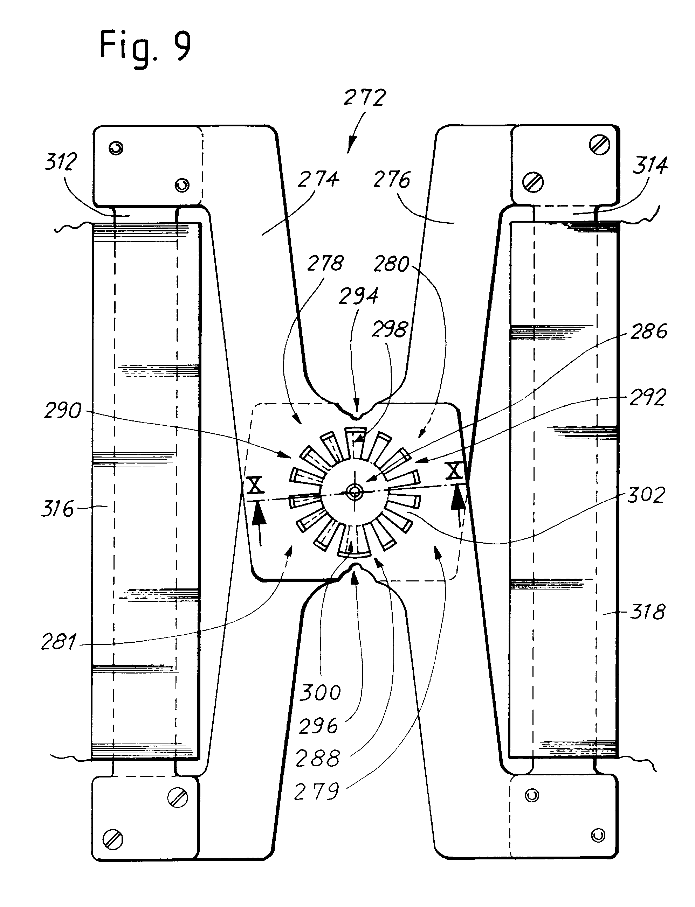

- les figures 8 et 10 sont des vues en coupe respectivement selon les lignes de coupe VIII-VIII et X-X des figures 7 et 9;

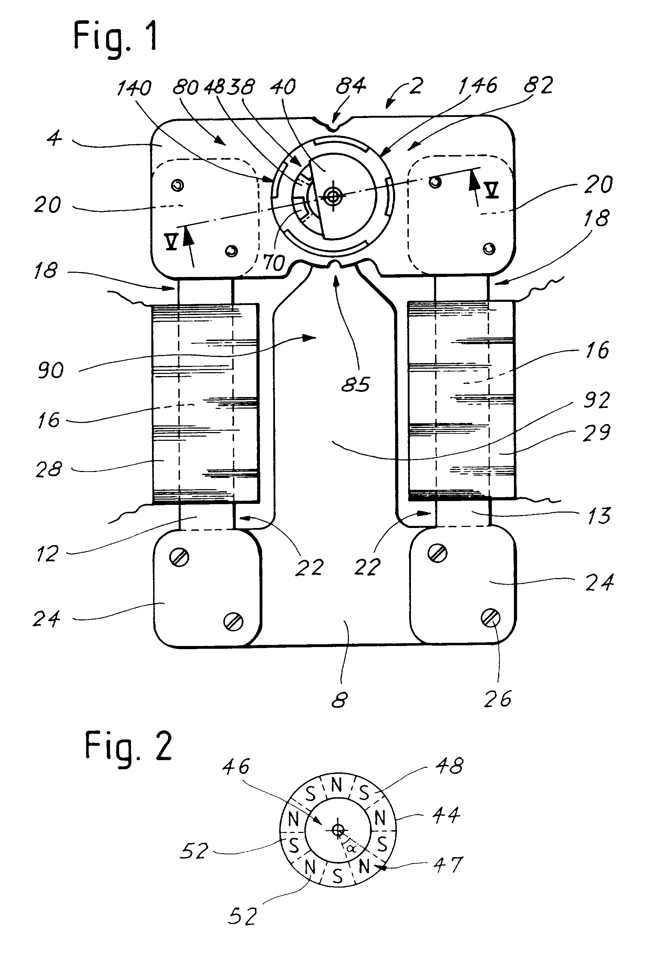

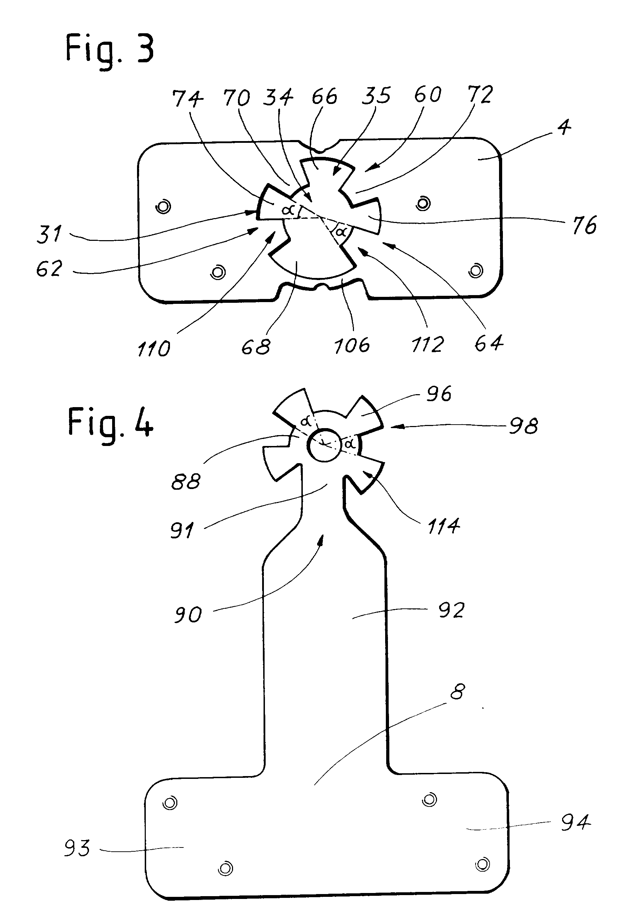

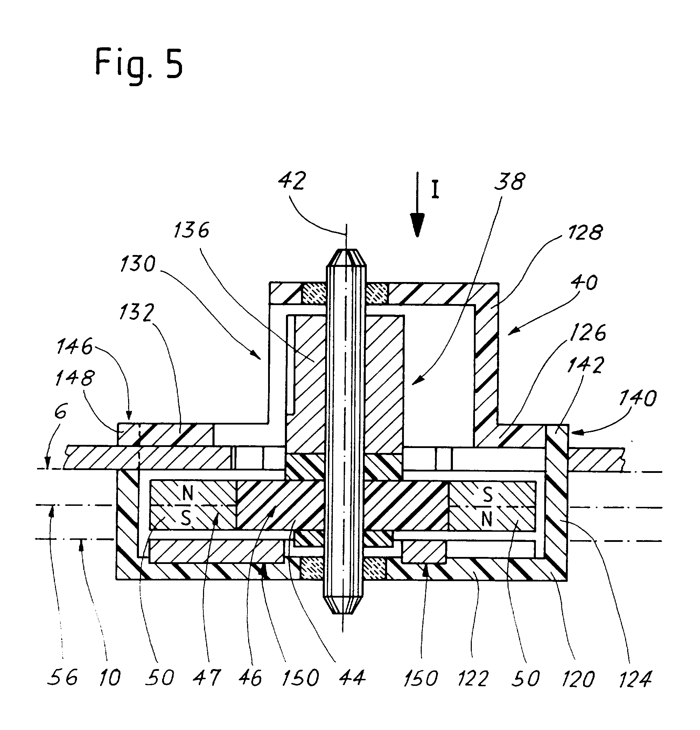

En se référant aux figures 1 à 5, on décrira ci-après un premier mode de réalisation d'un transducteur électromagnétique selon l'invention.

Ce transducteur électromagnétique comprend un stator 2 comportant une première partie statorique principale 4 plane et située contre un premier plan statorique 6 et une deuxième partie statorique principale 8 plane et située contre un deuxième plan statorique 10 parallèle au premier plan 6. Ces première et deuxième parties statoriques principales 4 et 8 sont reliées magnétiquement entre elles au moyen de première et seconde branches de guidage du flux magnétique 12, 13, chacune de ces branches comprenant un noyau 16 dont la première extrémité 18, respectivement seconde extrémité 22 est terminée par une première, respectivement seconde oreille de contact magnétique 20, 24.

La première, respectivement seconde oreille de contact magnétique 20, 24 est reliée magnétiquement à la première, respectivement deuxième partie statorique principale 4, 8 au moyen de vis de fixation 26, tout autre moyen de fixation étant naturellement envisageable. Sur chacun des deux noyaux 16 est montée une première, respectivement seconde bobine 28, 29, ces deux bobines étant reliées à une alimentation électrique comprenant un système de commande du moteur approprié (non représentée).

La première partie statorique principale 4 définit un premier trou statorique 31. Le premier trou statorique 31 comprend une région centrale 34 de forme circulaire et une région périphérique 35 de forme annulaire. Un rotor 38 est monté dans une cage 40 de telle manière que l'axe de rotation 42 du rotor 38 soit perpendiculaire au premier et deuxième plans statoriques 6, 10 et qu'il passe par le centre de la région circulaire centrale 34 du premier trou statorique 31.

Le rotor 38 comporte un disque 44 comprenant une partie centrale amagnétique 46 de forme circulaire et une partie périphérique annulaire 47 comprenant un aimant permanent multipolaire 48 comportant dix aimants permanents bipolaires 50 définissant dix paires de pôles magnétiques. On notera que la partie centrale amagnétique 46 n'est pas obligatoirement nécessaire, l'aimant pouvant se prolonger jusqu'au centre du disque. Les paires de pôles magnétiques sont orientées axialement, c'est-à-dire selon une direction parallèle à l'axe de rotation 42 du rotor 38. Le nombre de paires de pôles choisi dans ce mode de réalisation d'un transducteur électromagnétique selon l'invention est donné uniquement à titre d'exemple. En effet, le transducteur électromagnétique selon l'invention comprend un nombre pair N d'aimants permanents bipolaires, N étant supérieur à 2.

Les aimants permanents bipolaires 50 sont disposées de manière régulière dans la partie périphérique annulaire 47 du disque 44, de telle manière que chacun de ces aimants permanents bipolaires définisse un secteur annulaire 52 dont l'angle au centre α a une valeur identique pour chacun des secteurs annulaires 52.

Dans le présent document, on nomme secteur annulaire la surface limitée par deux rayons partant d'un seul et même point et par deux arcs de cercle centrés tous deux sur ce point, les extrémités des deux arcs de cercle étant situées chacune sur un des deux rayons. Dans l'exemple décrit ici, l'angle au centre α a la valeur de 36°.

Le disque 44 du rotor 38 est perpendiculaire à l'axe de rotation 42 de ce rotor et situé dans un plan général rotorique 56 intermédiaire aux premier et deuxième plans statoriques 6 et 10.

Le contour du premier trou statorique 31 opéré dans la première partie statorique principale 4 définit un premier créneau circulaire 60 situé dans la région périphérique 35 de ce premier trou statorique 31. Ce premier créneau circulaire 60 est formé par des premier et deuxième créneaux réguliers 62, 64 séparés l'un de l'autre par des première et seconde embrasures intermédiaires 66, 68. Le premier et deuxième créneaux réguliers 62, 64 sont formés chacun par une alternance de merlons 70, 72, et d'embrasures 74, 76 situées entre deux merlons adjacents d'un même créneau régulier.

La première partie statorique principale 4 du stator 2 définit des premier et deuxième pôles magnétiques principaux 80, 82 isolés magnétiquement l'un de l'autre au moyen de premier et second isthmes 84, 85 d'isolation magnétique. Le premier isthme 84 et le second isthme 85 sont respectivement situés dans la région avoisinant les première et seconde embrasures intermédiaires 66, 68 de la région périphérique 35 du premier trou statorique 31.

La première oreille de contact magnétique 20 des première et seconde branches de guidage du flux magnétique 12, 13 sont reliées magnétiquement et respectivement aux premier et deuxième pôles magnétiques principaux 80, 82.

La deuxième partie statorique principale 8 comprend une partie annulaire 88 appartenant à un troisième pôle magnétique principal 90. Cette deuxième partie statorique principale 8 comprend encore un corps 92 relié à la partie annulaire 88 par le moyen d'un cou 91, ce corps 92 étant terminé par deux oreilles de contact magnétique 93 et 94. Des merlons 96, faisant saillie du bord extérieur de la partie annulaire 88, forment un deuxième créneau circulaire 98 essentiellement superposé au premier créneau circulaire 60 de la première partie statorique principale 4.

Chacun des merlons 96 du deuxième créneau circulaire 98 définit un secteur annulaire dont l'angle au centre α est identique à l'angle au centre des merlons 70, 72 du premier créneau circulaire 60. Le deuxième créneau circulaire 98 comprend un nombre de merlons 96 identique au nombre de merlons 70 et 72 du premier créneau circulaire 60, chacun des merlons 96 du deuxième créneau circulaire 98 ayant une orientation identique à l'un des merlons 70, 72 du premier créneau circulaire 60. La partie périphérique annulaire 47 du disque 44 du rotor 38 est essentiellement superposée à la région périphérique 35 du premier trou statorique 31 dans laquelle est situé le premier créneau circulaire 60.

Afin de forcer le flux magnétique produit par l'une ou l'autre des deux bobines 28 et 29 à passer à travers les paires de pôles magnétiques 50 du rotor 38, il est prévu que la région de superposition entre les première et deuxième parties statoriques principales 4 et 8 soit essentiellement définie par les merlons 70 et 72, respectivement 96 du premier, respectivement deuxième créneau circulaire 60, 98.

Pour ce faire, le cou 91 de la deuxième partie statorique 8 reliant la partie annulaire 88 au corps 92 est la seule partie en-dehors des merlons 96 de cette deuxième partie statorique principale 8 à être superposée partiellement à la première partie statorique principale 4. La région de superposition entre le cou 91 de la deuxième partie statorique principale 8 et la première partie statorique principale 4 est rendu minimale par le fait que le cou 91 est superposé à la première partie principale statorique 4 dans la région du second isthme d'isolation magnétique 85, lequel est situé dans la région centrale d'une bande étroite 106. Ainsi, la quantité du flux magnétique pouvant passer directement de la première partie statorique principale 4 à la deuxième partie statorique principale 8, sans traverser l'aimant permanent multipolaire 48 du rotor 38, est négligeable.

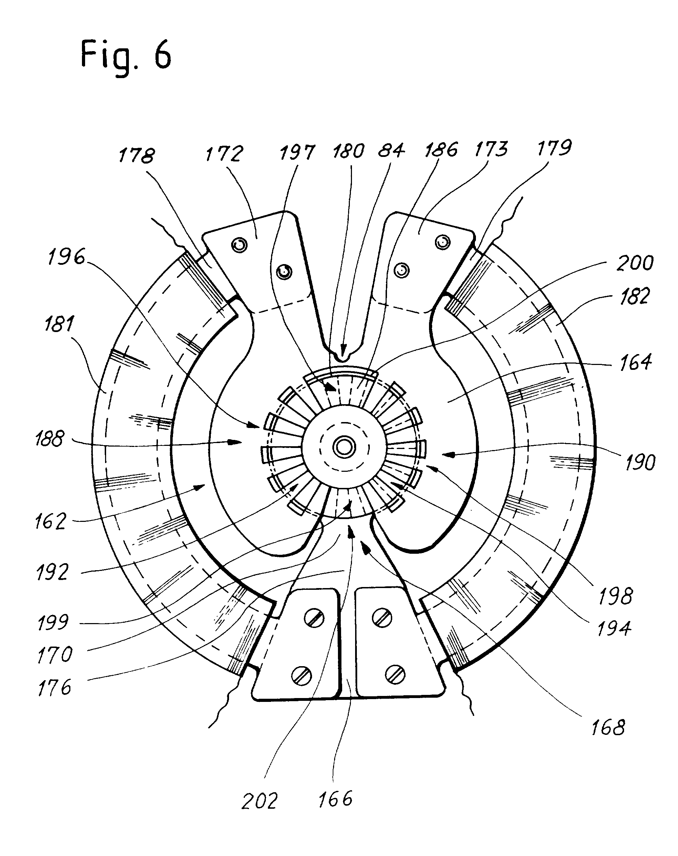

Pour éliminer toute région de superposition autre que les merlons 70, 72 de la première partie statorique principale 4 entre la première et la deuxième partie statorique principale, il est possible de prévoir un entrefer à la place du second isthme d'isolation magnétique 85 et de la bande étroite 106, comme c'est le cas dans le deuxième mode de réalisation de l'invention décrit à la figure 6. On notera aussi que le premier isthme d'isolation magnétique 84 peut être remplacé par un entrefer dans une autre variante de ce mode de réalisation.

Le transducteur électromagnétique décrit ci-avant a deux circuits magnétiques principaux. Les premier et deuxième circuits magnétiques principaux sont formés respectivement par les première et seconde branches de guidage du flux magnétique, les premier et deuxième pôles magnétiques principaux 80, 82, les premier et deuxième créneaux réguliers 62, 64, ainsi que par une moitié de l'aimant permanent multipolaire 48 du rotor 38, le deuxième créneau circulaire 98 et finalement le troisième pôle magnétique principal 90. Ainsi, les merlons 70, 72 des premier et deuxième créneaux réguliers 62, 64 forment respectivement des premiers et deuxièmes pôles magnétiques secondaires 110, 112. De la même manière, les merlons 96 du deuxième créneau circulaire 98 de la deuxième partie statorique principale 8 formant des troisièmes pôles magnétiques secondaires 114.

Dans le transducteur électromagnétique décrit ci-avant, on remarquera que le décalage angulaire entre deux merlons 70, 72 du premier, respectivement deuxième créneau régulier 62, 64 est égal à deux fois la valeur de l'angle α, alors que le décalage angulaire entre un merlon 70 du premier créneau régulier 62 et un merlon 72 du deuxième créneau régulier 64 est égal à un nombre entier de fois l'angle α plus α/2. Ainsi, lorsqu'un merlon 70 du premier créneau régulier 62 est superposé à un pôle nord se trouvant en face de lui, tous les autres merlons 70 de ce premier créneau régulier sont aussi superposés à des pôles nord de l'aimant permanent multipolaire 48 leur faisant face, alors que chacun des merlons 72 du deuxième créneau régulier 64 est superposé à part égale à un pôle nord et à un pôle sud de l'aimant permanent multipolaire 48 lui faisant face.

Un fonctionnement possible du transducteur électromagnétique décrit ci-dessus est le suivant: la première bobine 28 est alimentée en alternance avec la seconde bobine 29. Lorsqu'une bobine 28, 29 est excitée, l'aimant permanent multipolaire 48 du rotor 38 va aligner les paires de pôle 50 sur les merlons du circuit magnétique principal auquel appartient cette bobine. Ainsi, dans un mode de fonctionnement pas à pas de ce transducteur électromagnétique, le rotor effectue une rotation d'un angle α/2 à chaque pas. Dans le cas de l'aimant multipolaire 48 possédant 10 paires de pôles magnétiques 50, le rotor 38 effectue un tour tous les 20 pas.

Dans le mode de réalisation de l'invention décrit ci-dessus, la cage 40 dans laquelle le rotor 38 est monté est donnée uniquement à titre d'exemple. La cage 40 du rotor 38 comprend une première partie 120 formée d'un fond 122 de forme circulaire et d'une paroi latérale 124, cette cage 40 comprenant encore une deuxième partie 126 comportant un cylindre creux borgne 128 présentant une ouverture 130 dans sa surface latérale et un flasque 132. L'ouverture 130 est prévue pour permettre à une roue de s'engrener sur le pignon de transmission 136 de la force mécanique.

La première partie 120 de la cage 40 du rotor comprend sur sa surface latérale du côté de l'extrémité libre un créneau 140 dont les merlons 142 correspondent aux embrasures 74, 76 du créneau circulaire 60 et aux deux embrasures intermédiaires 66 et 68. Une embrasure est prévue dans le merlon correspondant à l'embrasure intermédiaire 68 pour le cou 91 de la deuxième partie statorique principale 8, cette embrasure étant plus profonde que les autres embrasures du créneau 140 de cette première partie 120 de la cage 40 qui ont une profondeur correspondant à l'épaisseur de la première partie statorique principale 4 à laquelle on ajoute l'épaisseur du flasque 132. Le flasque 132 de la deuxième partie 126 de la cage du rotor est lui-même terminé par un créneau 146 complémentaire au créneau 140 de la première partie 120 de la cage du rotor, les merlons 148 du créneau 146 du flasque 132 correspondant aux embrasures du créneau 140 de la première partie 120 de la cage du rotor, de telle manière que les merlons 142 et 148 puissent s'imbriquer les uns dans les autres. On notera encore qu'une empreinte 150 est prévue dans le fond 122 de la première partie 120 de la cage du rotor, cette empreinte correspondant au contour de la partie de la deuxième partie statorique principale qui est superposée au fond 122 de cette première partie 120 de la cage du rotor.

En se référant à la figure 6, on décrira ci-après un deuxième mode de réalisation d'un transducteur électromagnétique selon l'invention.

Le stator 162 de ce transducteur électromagnétique comprend des première et deuxième parties statoriques principales 164, 166. La première partie statorique principale 164 se distingue essentiellement du premier mode de réalisation décrit dans les figures 1 à 5 premièrement par le fait que la bande étroite 106 et l'isthme d'isolation magnétique 85 du premier mode de réalisation sont remplacés par un entrefer 168 suffisamment large pour permettre au cou 170 de la deuxième partie statorique principale 166 de ne présenter aucune surface de superposition avec la première partie statorique principale 164. Deuxièmement, cette première partie statorique principale 162 est caractérisée par le fait que ses deux oreilles de contact magnétique 172, 173 sont situées dans une région voisine et opposée à la région dans laquelle est situé le corps 176 de la deuxième partie statorique principale 168 par rapport à l'aimant permanent multipolaire 180 du rotor (pour des raisons de clarté du dessin, seul l'aimant permanent multipolaire du rotor a été dessiné dans la figure 6).

Les deux parties statoriques principales 164 et 166 sont reliées entre elles au moyen de branches 178, 179 en forme d'arc de cercle. Cette configuration particulière du stator 162 donne au transducteur électromagnétique une forme compacte avec une longueur de bobine 181, 182 relativement élevée. En outre, cette configuration du stator 162 est particulièrement appropriée à un rotor comprenant un aimant permanent multipolaire 180 relativement grand, comme c'est le cas ici. L'aimant permanent multipolaire 180 de ce deuxième mode de réalisation comporte trente paires de pôles 186 orientées axialement, chacune de ces paires de pôles 186 définissant un secteur annulaire identique.

A nouveau, la première partie statorique 162 définit des premier et deuxième pôles magnétiques principaux 188, 190 reliés magnétiquement et respectivement à des premiers et deuxièmes pôles magnétiques secondaires 192, 194 définis respectivement par les merlons de premier et deuxième créneaux réguliers 196, 198. Ces premier et deuxième créneaux réguliers étant séparés l'un de l'autre par des première et deuxième embrasures intermédiaires 197, 199. Comme dans la première variante, chacun des merlons de ces deux créneaux réguliers définit un secteur annulaire dont l'angle au centre est identique à l'angle au centre défini par les secteurs annulaires dans lesquels sont situées les paires de pôles 186 de l'aimant permanent multipolaire 180. Les embrasures séparant les merlons de chacun de ces deux créneaux réguliers 196 et 198 définissent aussi des secteurs annulaires dont l'angle au centre est identique à l'angle au centre défini par les merlons de ces premier et deuxième créneaux réguliers 196, 198.

La deuxième partie statorique principale 166 est formée par un corps 176 et par un anneau 200, formant un troisième pôle magnétique principal 202, reliés entre eux par un cou 170. L'anneau 200 a un diamètre extérieur sensiblement identique au diamètre de l'aimant permanent multipolaire 180, l'ouverture intérieure de cet anneau 200 servant au moins au passage de l'axe du rotor de ce transducteur électromagnétique.

Comme dans le premier mode de réalisation de l'invention, la première, respectivement deuxième partie statorique principale 164, 166 et l'aimant permanent multipolaire 180 du rotor ont une structure plane et définissent trois plans parallèles et voisins, le plan de l'aimant permanent multipolaire 180 étant intermédiaire aux deux autres plans.

En se référant aux figures 7 et 8, on décrira ci-après un troisième mode de réalisation d'un transducteur électromagnétique selon l'invention.

Ce transducteur électromagnétique comprend un stator 210 comprenant une première partie statorique 212 définissant un premier trou statorique 214 et des premier et deuxième pôles magnétiques principaux 215, 216, chacun de ces deux pôles magnétiques principaux ayant la forme d'une aile de papillon terminée par une oreille de contact magnétique 218. Tout comme dans les deux modes de réalisation de l'invention décrits ci-avant, le premier trou statorique 214 comprend une région centrale 220 et une région périphérique 222 dans laquelle le contour du premier trou statorique 214 définit un premier créneau circulaire 224. Ce premier créneau circulaire 224 est formé à nouveau par des premier et deuxième créneaux réguliers 226, 228, ces deux créneaux réguliers étant séparés l'un de l'autre par des première et deuxième embrasures intermédiaires 230, 232.

Des premier et deuxième isthmes 234, 236 servant à isoler magnétiquement les premier et deuxième pôles magnétiques principaux 215 et 216 sont respectivement prévus dans les régions avoisinant les première et deuxième embrasures intermédiaires 230, 232. On remarquera que la structure de la première partie statorique 212 est sensiblement semblable dans la région avoisinant la première embrasure intermédiaire 230 et dans la région avoisinant la deuxième embrasure intermédiaire 232.

Etant donné que l'aimant permanent multipolaire 238 comprend vingt paires de pôles magnétiques 240 orientés axialement, les merlons des premier et deuxième créneaux réguliers 226, 228 définissent un angle au centre de 18°. Afin d'utiliser au mieux le volume utile de l'aimant permanent multipolaire 238, les deux merlons 242 et 244 définissant la deuxième embrasure intermédiaire 232 sont de dimension réduite de manière à ce que la deuxième embrasure intermédiaire 232 soit suffisante pour isoler, conjointement avec le deuxième isthme 236, les premier et deuxième pôles magnétiques principaux 215 et 216. Les deux merlons 242 et 244 définissent ainsi un angle au centre plus petit que l'angle au centre défini par les autres merlons. Dans l'exemple donné à la figure 7, ces deux merlons 242 et 244 définissent un angle au centre d'une valeur d'environ 14°. Cette structure particulière du premier créneau circulaire 224 permet d'avoir un nombre maximal de merlons définissant des pôles magnétiques secondaires par lesquels passe le flux mutuel du couplage aimant permanent multipolaire 238 et bobine 246, 247. Une telle structure permet donc d'obtenir un couplage magnétique entre l'aimant permanent multipolaire et la bobine qui soit maximal.

Ce transducteur électromagnétique comprend également une deuxième partie statorique principale 248 comprenant un corps central 250 terminé à une extrémité par deux oreilles de contact magnétique 252 et à l'autre extrémité par un anneau 254 collecteur du flux magnétique définissant un deuxième trou statorique 255. Cet anneau 254 définit un troisième pôle magnétique principal 256. Un second créneau circulaire 258 est prévu dans la région annulaire avoisinant le bord interne 260 de l'anneau 254 collecteur du flux magnétique. Les merlons de ce deuxième créneau circulaire 258 définissent des troisièmes pôles magnétiques secondaires. La projection du deuxième créneau circulaire 258 sur le plan général 264 de la deuxième partie statorique principale est identique à la projection du premier créneau circulaire 224 sur le premier plan statorique 265 de la première partie statorique principale. Cependant, étant donné que les première et deuxième parties statoriques principales 212 et 248 possèdent une surface de superposition relativement grande autre que la surface des merlons des premier et deuxième créneaux circulaires 224, 258, l'épaisseur de la majeure partie des merlons 262 du deuxième créneau circulaire 258 est supérieure à l'épaisseur de l'anneau 254 collecteur du flux magnétique. La majeure partie des merlons 262 fait saillie hors du plan général 264 dans lequel est compris essentiellement la deuxième partie statorique principale 248 en direction du plan général rotorique 266, parallèle au plan général 265, dans lequel est situé l'aimant permanent multipolaire 238 de ce transducteur électromagnétique, l'extrémité de ces merlons 262 définissant un deuxième plan statorique 268 parallèle au plan 266 de l'aimant permanent multipolaire 238.

On notera que pour des raisons de clarté, seul l'aimant permanent multipolaire 238 et un axe du rotor 269 ont été représentés sur les figures 7 et 8.

On remarquera aussi qu'une structure compacte semblable à celle du deuxième mode de réalisation de l'invention décrit ci-avant est sans autre réalisable dans une variante de ce troisième mode de réalisation d'un transducteur électromagnétique selon l'invention. En plus, dans un autre mode de réalisation de l'invention, il est prévu que l'anneau collecteur du flux magnétique ne comporte pas de créneau circulaire, cet anneau étant alors partiellement superposé avec l'aimant permanent multipolaire 238.

En se référant aux figures 9 et 10, on décrira ci-après un quatrième mode de réalisation d'un transducteur électromagnétique selon l'invention.

Ce transducteur électromagnétique comprend un stator 272 comportant des première et deuxième parties statoriques principales 274, 276. Dans ce mode de réalisation, le transducteur électromagnétique comprend quatre pôles magnétiques principaux. En effet, les première et deuxième parties statoriques principales 274, 276 définissant des premier et deuxième, respectivement troisième et quatrième pôles magnétiques principaux 278 et 279, 280 et 281.

Le stator 272 de ce transducteur électromagnétique est situé essentiellement dans deux plans généraux parallèles 306 et 308, l'aimant permanent multipolaire 284 du rotor étant situé dans un plan général rotorique 310 intermédiaire à ces deux plans généraux statoriques. A nouveau, pour des raisons de clarté, seul l'aimant permanent multipolaire 284 et un axe du rotor ont été représenté dans les figures 9 et 10. Dans la variante du quatrième mode de réalisation décrit ici, la première partie statorique principale 274 est exactement identique à la deuxième partie statorique principale 276. Chacune de ces parties statoriques principales 274, 276 définit un trou statorique 286 comprenant un créneau circulaire 288 dans sa partie périphérique. Ce créneau circulaire 288 est formé par deux créneaux réguliers 290, 292 dont les merlons définissent des premiers et deuxièmes, respectivement troisièmes et quatrièmes pôles magnétiques secondaires. Ces créneaux réguliers 290, 292 sont isolés magnétiquement l'un de l'autre au moyen d'isthmes 294 et 296 situés dans la région des embrasures intermédiaires 298 et 300 séparant les deux créneaux réguliers 290 et 292.

Les premier et quatrième, respectivement deuxième et troisième pôles magnétiques principaux sont reliés magnétiquement entre eux au moyen d'une première, respectivement deuxième branches 312, 314 de guidage du flux magnétique portant chacune une bobine 316, 318.

Dans la variante décrite ici, l'aimant permanent multipolaire comprend trente paires de pôles magnétiques orientiées axialement. Afin d'éviter des champs de fuite entre la première et la deuxième partie statorique principale 274 et 276, la majeure partie des merlons 302 du créneau circulaire 288 font saillie hors du plan général respectif 306, 308 de la partie statorique principale respective 274, 276 en direction du plan intermédiaire 310 dans lequel est situé l'aimant permanent multipolaire 284, l'extrémité de ces merlons 302 définissant des premier et deuxième plans statoriques 312, 314 parallèles au plan général rotorique 310.

## Revendications

1. Transducteur électromagnétique comprenant :
- un stator (2; 162; 210; 272) comprenant deux branches (12, 13; 178, 179; 312, 314) de guidage du flux magnétique et une première partie statorique principale (4; 169; 212; 274) définissant un premier trou statorique (31; 214; 286) ayant une région centrale (34; 220) et une région périphérique (35; 222) entourant ladite région centrale, le contour dudit premier trou statorique définissant dans ladite région périphérique un premier créneau circulaire (60; 224; 288) situé dans un premier plan statorique (6; 265; 312) et formé de merlons (70, 72; 242, 244; 302) séparés par des embrasures (74, 76, 66, 68; 230, 232);
- un rotor (38) ayant un axe de rotation (42) perpendiculaire audit premier plan statorique et traversant ladite région centrale dudit premier trou statorique, ce rotor comportant un nombre pair et supérieur à deux d'aimants permanents bipolaires disposés annulairement autour dudit axe de rotation et définissant un plan général rotorique (56; 266; 310), ces aimants bipolaires ayant chacun un axe magnétique parallèle audit axe de rotation, deux aimants bipolaires adjacents ayant respectivement deux axes magnétiques de sens opposé, lesdites paires de pôles magnétiques étant au moins partiellement disposées en regard d'une partie de superposition desdits merlons et définissant dans ledit plan rotorique des secteurs annulaires (52) dont les angles au centre (α) ont des valeurs identiques;
- des première et seconde bobines (28, 29; 181, 182; 246, 247; 316, 318) montées respectivement sur lesdites première et deuxième branches de guidage du flux magnétique (12, 13; 178, 179; 312, 314);
ce transducteur électromagnétique étant caractérisé en ce que ledit stator comprend une deuxième partie statorique principale (8; 166; 248; 276) ayant une partie de superposition disposée en regard desdites paires de pôles magnétiques et définissant un deuxième plan statorique (10; 268; 314) parallèle audit premier plan statorique, lesdites parties de superposition desdits merlons et de ladite deuxième partie statorique principale étant respectivement situées d'un premier côté et d'un second côté dudit plan général rotorique et étant au moins partiellement superposées l'une à l'autre, ladite première partie statorique principale définissant des premier et deuxième pôles magnétiques principaux (80, 82; 188, 190; 215, 216; 278, 279) et ladite deuxième partie statorique principale définissant au moins un troisième pôle magnétique principal (90; 202; 256; 280), lesdites première et deuxième branches de guidage du flux magnétique reliant magnétiquement et respectivement lesdits premier et deuxième pôles magnétiques principaux avec ladite deuxième partie principale, ledit premier créneau circulaire (60; 224; 288) étant formé par des premier et second créneaux réguliers (62, 64; 196, 198; 226, 228; 290, 292) séparés l'un de l'autre par des première et deuxième zones à haute réluctance magnétique (66, 68; 197, 199; 230, 232; 298, 300), les merlons dudit premier, respectivement second créneau régulier définissant des premiers, respectivement deuxièmes pôles magnétiques secondaires (110, 112; 192, 194) reliés magnétiquement audit premier, respectivement deuxième pôle magnétique principal, deux merlons adjacents dudit premier, respectivement deuxième créneau régulier étant décalés angulairement l'un par rapport à l'autre de deux fois ladite valeur dudit angle au centre (α), un quelconque merlon dudit premier créneau régulier étant décalé angulairement par rapport à un quelconque merlon dudit deuxième créneau régulier d'un angle dont la valeur est égale à un nombre entier de fois ladite valeur dudit angle au centre (α) plus un demi de cette valeur.

2. Transducteur électromagnétique selon la revendication 1, caractérisé en ce que ladite deuxième partie statorique (8; 166; 248) comprend un corps (92; 176; 250) prolongé par deux oreilles de contact magnétique (93, 94; 252).

3. Transducteur électromagnétique selon la revendication 2, caractérisé en ce que ledit corps (176) est relié magnétiquement par un cou (170) à un anneau collecteur (200) du flux magnétique comprenant ladite partie de superposition de ladite deuxième partie statorique principale (166).

4. Transducteur électromagnétique selon la revendication 2, caractérisé en ce que ledit corps (92) est relié magnétiquement à une partie annulaire (88) par un cou (91), un deuxième créneau circulaire (98) étant prévu sur le bord externe de cette partie annulaire, ce deuxième créneau circulaire et une partie dudit cou (91) comprenant ladite partie de superposition de la deuxième partie statorique principale (8) , la distribution angulaire des merlons (96) dudit deuxième créneau circulaire étant sensiblement identique à la distribution angulaire desdits merlons (70, 72) dudit premier créneau circulaire (60).

5. Transducteur électromagnétique selon la revendication 3 ou 4, caractérisé en ce qu'un isthme (84) et un entrefer (168) d'isolation magnétique desdits premier et deuxième pôles magnétiques principaux (188, 190) sont prévus respectivement dans les première et deuxième zones à haute réluctance magnétique (197, 199), ledit cou (91) de la deuxième partie statorique principale (166) n'étant pas superposé avec la première partie statorique principale (164).

6. Transducteur électromagnétique selon l'une quelconque des revendications 1 à 5, caractérisé en ce que lesdites première et deuxième parties statoriques principales (4, 8; 164, 166) sont entièrement planes et situées respectivement contre lesdits premier et deuxième plans statoriques (6, 10).

7. Transducteur électromagnétique selon l'une des revendications 1 à 3, caractérisé en ce que ladite deuxième partie statorique principale (248; 276) comprend une partie collectrice du flux magnétique définissant un deuxième trou statorique (255) et comprenant ladite région de superposition de ladite deuxième partie statorique principale.

8. Transducteur électromagnétique selon la revendication 7, caractérisé en ce que le contour dudit deuxième trou statorique (255) définit un deuxième créneau circulaire (258), les merlons de ce deuxième créneau circulaire étant essentiellement superposés auxdits merlons dudit premier créneau circulaire (224) et présentant une distribution angulaire sensiblement identique à celle de ces derniers merlons.

9. Transducteur électromagnétique selon la revendication 8, caractérisé en ce que ladite deuxième partie statorique principale (276) est située essentiellement dans un plan général (308), lesdits merlons dudit deuxième créneau circulaire faisant saillie hors de ce plan général en direction dudit plan général rotorique (310).

10. Transducteur électromagnétique selon l'une quelconque des revendications précédentes, caractérisé en ce que ladite deuxième partie statorique principale (276) définit un quatrième pôle magnétique principal (281), lesdits troisième et quatrième pôles magnétiques principaux (280, 281) étant reliés magnétiquement auxdites première et deuxième branches (312, 314) de guidage du flux magnétique.

11. Transducteur électromagnétique selon les revendications 9 et 10, caractérisé en ce que lesdites première et deuxième parties statoriques principales (274, 276) sont identiques.

12. Transducteur électromagnétique selon l'une quelconque des revendications précédentes, caractérisé en ce que ledit nombre d'aimants permanents bipolaires (186) dudit rotor est égal à trente.

## Claims

1. Electromagnetic transducer comprising :
- a stator (2; 162; 210; 272) comprising two magnetic flux guidance legs (12, 13; 178, 179; 312, 314) and a first principal stator part (4; 169; 212; 274) defining a first stator hole (31; 214; 286) having a central region (34; 220) and a peripheral region (35; 222) surrounding said central region, the contour of said first stator hole defining within said peripheral region a first gapped circular crown (60; 224; 288) located in a first stator plane (6; 265; 312) and formed of castellations (70, 72; 242, 244; 302) separated by slots (74, 76, 66, 68; 230, 232);
- a rotor (38) having a rotation axis (42) perpendicular to said first stator plane and traversing said central region of said first stator hole; such rotor including an even number greater than two of bipolar permanent magnets arranged annularly around said rotation axis and defining a general rotor plane (56; 266; 310), such bipolar magnets having each a magnetic axis parallel to said rotation axis, two adjacent bipolar magnets having respectively two magnetic axes of opposite orientation, said pairs of poles being at least partially arranged facing at least a superposition portion of said castellations and defining in said rotation plane annular sectors (52) whose angles (α) at the center have identical values;
- first and second windings (28, 29; 181, 182; 246, 247; 316, 318) mounted respectively on said first and second magnetic flux guidance legs (12, 13; 178, 179; 312, 314);
such electromagnetic transducer being characterized in that said stator comprises a second principal stator part (8; 166; 248; 276) having a superposition portion arranged to face said pairs of magnetic poles and defining a second stator plane (10; 268; 314) parallel to said first stator plane, said superposition portions of said castellations and of said second principal stator part being respectively located on a first side and on a second side of said general stator plane and being at least partially superposed to one another, said first principal stator part defining first and second principal magnetic poles (80, 82; 188, 190; 215, 216; 278, 279) and said second principal stator part defining at least one third principal magnetic pole (90; 202; 256; 280), said first and second magnetic flux guidance legs magnetically and respectively coupling said first and second principal stator part, said first gapped circular crown (60; 224; 288) being formed by first and second regularly gapped crowns (62, 64; 196, 198; 226, 228; 290, 292) separated from one another by first and second intermediate slots (66, 68; 197, 199; 230, 232; 298, 300), the castellations of said respective first and second regularly gapped crowns defining respective first and second secondary magnetic poles (110, 112; 192, 194) magnetically coupled to said respective first and second principal magnetic poles, two adjacent castellations of said respective first and second regularly gapped crowns being angularly separated from each other by twice said value of said angle (α) at the center, while any one of said castellations of said first regularly gapped crown being angularly separated relative to any one of said castellations of said second regularly gapped crown by an angle the value of which is equal to a positive integer times said value of said angle (α) at the center plus half the value of said angle at the center.

2. Electromagnetic transducer according to claim 1, characterized in that said second stator part (8; 166; 248) comprises a body (92; 176, 250) extended by two magnetic contact lugs (93, 94; 252).

3. Electromagnetic transducer according to claim 2, characterized in that said body (176) is magnetically coupled by a neck (170) to a magnetic flux collector ring (200) comprising said superposition portion of said second principal stator part (166).

4. Electromagnetic transducer according to claim 2, characterized in that said body (92) is magnetically coupled to an annular portion (88) by a neck (91), a second gapped circular crown (98) being provided on the outer edge of said annular portion, such second gapped circular crown and a portion of said neck (91) comprising said superposition portion of the second principal stator part (8), the angular distribution of the castellations (96) of said second gapped circular crown being substantially identical to the angular distribution of said castellations (70, 72) of said first gapped circular crown (60).

5. Electromagnetic transducer according to claim 3 or 4, characterized in that an isthmus (84) and a magnetic insulation gap (168) of said first and second principal magnetic poles (188, 190) are provided respectively in the first and second regions of said intermediate slots (197, 199), said neck (91) of the second principal stator part (166) having no superposition portion with the first principal stator part (164).

6. Electromagnetic transducer according to any one of claims 1 to 5, characterized in that said first and second principal stator parts (4, 8; 164, 166) are entirely planar and respecitvely located against said first and second stator planes (6, 10).

7. Electromagnetic transducer according to any one of claims 1 to 3, characterized in that said second principal stator part (248; 276) comprises a magnetic flux collector portion defining a second stator hole (255) and comprising said superposition region of said second principal stator part.

8. Electromagnetic transducer according to claim 7, characterized in that the contour of said second stator hole (255) defines a second gapped circular crown (258), the castellations of such second gapped circular crown being basically superposed onto said castellations of said first gapped circular crown (224) and exhibiting an angular

9. Electromagnetic transducer according to claim 8, characterized in that said second principal stator part (276) is basically located in a general plane (308), said castellations of said second gapped circular crown projecting out of such general plane in the direction of said general rotor plane (310).

10. Electromagnetic transducer according to any one of the preceding claims, characterized in that said second principal stator part (276) defines a fourth principal magnetic pole (281), said third and fourth principal magnetic poles (280, 281) being magnetically coupled to said first and second magnetic flux guidance legs (312, 314).

11. Electromagnetic transducer according to claims 9 and 10, characterized in that said first and second principal stator parts (274, 276) are identical.

12. Electromagnetic transducer according to any one of the preceding claims, characterized in that said number of bipolar permanents magnets (186) of said rotor is equal to thirty.

## Patentansprüche

1. Elektromagnetischer Wandler, umfassend:
- einen Stator (2; 162; 210; 272) mit zwei Armen (12, 13; 178, 179; 312, 314) für die Führung des magnetischen Flusses und mit einer ersten Statorhauptpartie (4; 169; 212; 274), die ein erstes Statorloch (31; 214; 286) begrenzt mit einem zentralen Bereich (34; 220) und einem peripheren Bereich (35; 222), welcher den Zentralbereich umgibt, wobei die Kontur des ersten Statorloches in dem peripheren Bereich eine erste runde Zacke (60; 224; 288) begrenzt, gebildet in einer ersten Statorebene (6; 265; 312) und gebildet von durch Ausnehmungen (74, 76, 66, 68; 230, 232) getrennten Auskragungen (70, 72; 242, 244; 302);
- einen Rotor (38) mit einer Drehachse (42), die senkrecht zu der ersten Statorebene verläuft und den Zentralbereich des ersten Statorloches durchsetzt, welcher Rotor eine gerade Zahl größer als zwei von bipolaren Permanentmagneten umfaßt, die ringförmig um die Drehachse angeordnet sind und eine Rotorhauptebene (56; 266; 310) definieren, welche bipolaren Magnete jeder eine Magnetachse paralell zur Drehachse aufweisen, wobei zwei benachbarte bipolare Magnete entgegengesetzt gerichtetete Magnetachsen besitzen, wobei magnetische Polpaare mindestens teilweise gegenüber einer Partie der Überlagerung der Auskragungen angeordnet sind und in der Rotorebene Ringsektoren (52) begrenzen, deren Zentrumswinkel (α) identische Werte besitzen;
- eine erste und eine zweite Spule (28, 29; 181, 182; 246, 247; 316, 318), die auf dem ersten bzw. zweiten Magnetflußführungsarm (12, 13; 178, 179; 312, 314) angeordnet sind;
welcher elektromagnetische Wandler dadurch gekennzeichnet ist, daß der Stator eine zweite Statorhauptpartie (8; 166; 248; 276) mit einer Überlagerungspartie umfaßt, die gegenüber den magnetischen Polpaaren angeordnet ist und eine zweite Statorebene (10; 268; 314) definiert, die parallel zur ersten Statorebene verläuft, wobei die Überlagerungspartien und die zweite Statorhauptpartie auf einer ersten bzw. zweiten Seite der Rotorhauptebene liegen und mindestens teilweise zueinander überlagert sind, wobei die erste Statorhauptpartie erste und zweite Hauptmagnetpole (80, 82; 188, 190; 215, 216; 278, 279) definiert und die zweite Statorhauptpartie mindestens einen dritten Hauptmagnetpol (90; 202; 256; 280) definiert, wobei der erste und der zweite Magnetflußführungsarm den ersten und den zweiten magnetischen Hauptpol mit der zweiten Hauptpartie magnetisch verbinden, wobei die erste Kreiszacke (60; 224; 288) von ersten und zweiten regelmäßigen Zacken (62, 64; 196, 198; 226, 228; 290, 292) gebildet sind, voneinander durch erste und zweite Zonen hoher magnetischer Reluktanz (66, 68, 197, 199; 230, 232; 298, 300) getrennt sind, wobei die Auskragungen der ersten bzw. zweiten regelmäßigen Zacke, welche den ersten bzw. zweiten magnetischen Sekundärpol (110, 112; 192, 194) definieren, magnetisch mit dem ersten bzw. zweiten magnetischen Hauptpol verbunden sind, wobei zwei benachbarte Auskragungen der ersten bzw. zweiten regelmäßigen Zacke in Winkelrichtung zueinander um das Zweifache des Wertes des Zentrumswinkels (α) versetzt sind, wobei irgendeine Auskragung des ersten regelmäßigen Zackens in Winkelrichtung relativ zu irgendeiner Auskragung des zweiten regelmäßigen Zackens um einen Winkel versetzt ist, dessen Wert gleich einem ganzzahligen Vielfachen des Wertes des Zentrumswinkels (α) plus einer Hälfte dieses Wertes ist.

2. Elektromagnetischer Wandler nach Anspruch 1, dadurch gekennzeichnet, daß die zweite Statorpartie (8; 166; 248) einen Korpus (92; 176; 250) umfaßt, verlängert um zwei magnetische Kontaktaugen (93, 94; 252).

3. Elektromagnetischer Wandler nach Anspruch 2, dadurch gekennzeichnet, daß der Korpus (176) magnetisch über einen Kragen (170) mit einem Kollektorring (200) des Magnetflusses verbunden ist, der die Überlagerungspartie der zweiten Statorhauptpartie (166) umfaßt.

4. Elektromagnetischer Wandler nach Anspruch 2, dadurch gekennzeichnet, daß der Korpus (92) magnetisch mit einer ringförmigen Partie (88) über einen Kragen (91) verbunden ist, wobei eine zweite runde Zacke (98) auf dem Außenrand dieser Ringpartie vorgesehen ist, welcher zweite ringförmige Zacken und eine Partie des Kragens (91) die Überlagerungspartie der zweiten Statorhauptpartie (8) umfassen, wobei die Winkelverteilung der Auskragungen (96) des zweiten kreisförmigen Zackens im wesentlichen identisch ist mit der Winkelverteilung der Auskragungen (70, 72) des ersten runden Zackens (60).

5. Elektromagnetischer Wandler nach Anspruch 3 oder 4, dadurch gekennzeichnet, daß ein Isthmus (84) und ein Luftspalt (168) für die magnetische Isolation des ersten und des zweiten magnetischen Hauptpols (188, 190) in der ersten bzw. zweiten Zone hoher magnetischer Reluktanz (197, 199) vorgesehen sind, wobei der Kragen (91) der zweiten Statorhauptpartie (166) nicht mit der ersten Statorhauptpartie (164) überlagert ist.

6. Elektromagnetischer Wandler nach einem der Ansprüche 1 bis 5, dadurch gekennzeichnet, daß die erste und die zweite Statorhauptpartie (4, 8; 164; 166) vollständig eben sind und sich gegen die erste bzw. zweite Statorebene (6, 10) befinden.

7. Elektromagnetischer Wandler nach einem der Ansprüche 1 bis 3, dadurch gekennzeichnet, daß die zweite Statorhauptpartie (248, 276) eine Magnetflußkollektorpartie umfaßt, die ein zweites Statorloch (255) begrenzt und den Überlagerungsbereich der zweiten Statorhauptpartie umfaßt.

8. Elektromagnetischer Wandler nach Anspruch 7, dadurch gekennzeichnet, daß die Kontur des zweiten Statorloches (255) einen zweiten runden Zacken (258) definiert, wobei die Auskragungen dieses zweiten runden Zackens im wesentlichen den Auskragungen des ersten runden Zackens (224) überlagert sind und eine Winkelverteilung aufweisen, die im wesentlichen identisch ist mit jener der ersten Auskragungen.

9. Elektromagnetischer Wandler nach Anspruch 8, dadurch gekennzeichnet, daß die zweite Statorhauptpartie (276) sich im wesentlichen in einer Hauptebene (308) befindet, wobei die Auskragungen des zweiten runden Zackens aus der Hauptebene in Richtung der Rotorhauptebene (310) vorspringen.

10. Elektromagnetischer Wandler nach einem der vorangehenden Ansprüche, dadurch gekennzeichnet, daß die zweite Statorhauptpartie (276) einen vierten magnetischen Hauptpol (281) definiert, wobei der dritte und der vierte magnetische Hauptpol (280, 281) magnetisch mit dem ersten bzw. zweiten Zweig (312, 314) für das Führen des Magnetflusses verbunden sind.

11. Elektromagnetischer Wandler nach Ansprüchen 9 und 10, dadurch gekennzeichnet, daß die erste und die zweite Statorhauptpartie (274, 276) identisch sind.

12. Elektromagnetischer Wandler nach einem der vorangehenden Ansprüche, dadurch gekennzeichnet, daß die genannte Anzahl von permanenten bipolaren Magneten (186) des Rotors gleich dreißig ist.
